# NEW EUROPEAN PATENT SPECIFICATION

(11) **EP 1 052 421 B2**
(45) Date of publication and mention of the opposition decision: **13.09.2017**
(45) Mention of the grant of the patent: 09.03.2005
(21) Application number: 00109571.0
(22) Date of filing: 04.05.2000
(51) Int. Cl.: F16D 25/10

(54) **Multiple clutch system for a transmission**
Getriebe mit mehrfachen Kupplungssystem
Transmission à système d'embrayages multiples

(30) Priority: 12.05.1999 DE 19921687
(43) Date of publication of application: 15.11.2000
(73) Proprietor: BorgWarner, Inc., Auburn Hills MI 48326-1782 (US)
(72) Inventor: Merkel, Harald, 74889 Sinsheim (DE); Braford, Thomas Edward jr., Brighton MI 48114 (US)
(74) Representative: Westphal, Mussgnug & Partner Patentanwälte mbB

(56) References cited:
- EP-A- 0 702 171
- EP-A1- 0 691 486
- EP-A1- 0 702 171
- DE-A- 3 721 706
- DE-A1- 3 526 630
- DE-A1- 3 721 706
- DE-A1- 3 725 492
- DE-A1- 4 115 989
- DE-A1- 4 224 360
- DE-A1- 4 332 466
- DE-A1- 4 415 664
- DE-A1- 4 420 927
- DE-A1- 19 809 534
- DE-U- 9 114 528
- DE-U1- 9 114 528
- GB-A- 2 036 203
- GB-A1- 2 203 217
- US-A- 2 687 198
- US-A- 2 712 373
- US-A- 3 589 483
- US-A- 3 589 483
- US-A- 4 732 253
- US-A- 4 732 253
- JP S59159426 A 10.09.1984 mit Abstract

## Description

The invention concerns a multiple clutch system for a transmission, specifically a double clutch system for an auxiliary range transmission.

There have been numerous double clutch systems publicized, where one of the clutches is used for starting up, and both are used for changing gears when powershifting into an intermediate gear.

DE 35 26 630 A1 describes a double clutch for alternately coupling a central shaft and a hollow shaft that is concentric to it. This double clutch is meant for a speed change gear of a motor vehicle. A clutch disk connected to the central shaft on the one side, and a clutch disk connected to the hollow shaft on the other side can be pressed against a plate of the revolving clutch casing.

DE 43 32 466 A1 describes a double multi-disk clutch, enclosing a powered, revolving casing. Here also the two inner disk assemblies are each connected to a separate center member, so they are torsionally fixed. The one center member is torsionally fixed on one shaft, and the other center member torsionally fixed on a hollow shaft that is concentric to it. Both clutches are encased in each other, so that the one clutch surrounds the other, in order to reduce the axial design space.

US-A-3,589,483 describes a multiple clutche system according to the preamble of claim 1.

The double clutch principle that was introduced, with a hollow shaft and inner shaft that is enclosed by it, can be advantageously utilized with auxiliary range transmissions. In particular, the shifting thrust during gear changes can be minimized to zero, and an interruption in propulsive power can be avoided.

However, multiple clutch systems of the kind mentioned are in need of improvement. The disadvantage is that they can't be utilized in and combined with a larger number of transmission types and designs. Among other things, one contraindication is that numerous auxiliary units, such as oil pumps, filters, oil containers, sensors, solenoid valves, control valve assembly, electronic control, are distributed across the entire transmission.

The invention is based on the assignment to create a multiple clutch system of the kind described at the outset, so that it forms an extensive, self-sufficient unit, which can be easily combined with a variety of transmissions with different designs and sizes, and in addition, leads to a reduction of design space, weight and manufacturing costs.

This assignment is fulfilled by the characteristics of Claim 1. With it, the inventors have made an intelligent selection from the variety of combination possibilities. The system based on the invention represents a modular constructional unit. It incorporates at least the most important, if not all, the auxiliary units mentioned, that have been spread across the entire transmission in the past. Above all, it can be used with manual transmissions. An especially large, effective centrifugal mass is created through the torsionally fixed union of one of the two centrifugal masses of the torsional oscillation damper with the bell of one of the two clutches and the components connected to it. The constructional unit can be completely pre-manufactured, pre-assembled and pre-tested, so that it can be delivered to the transmission manufacturer or the vehicle manufacture with a quality certificate.

The invention is further explained in the drawing. The following details are represented:
Diagram 1 shows a double multi-disk clutch component with the corresponding auxiliary range transmission, based on the invention.
Diagram 2 shows the component in diagram 1 based on the invention, in an enlarged representation.
Diagram 3 is a top view of the object in diagram 2, shown from the engine side.
Diagram 4 shows a component with the corresponding transmission based on the invention, in a schematic representation

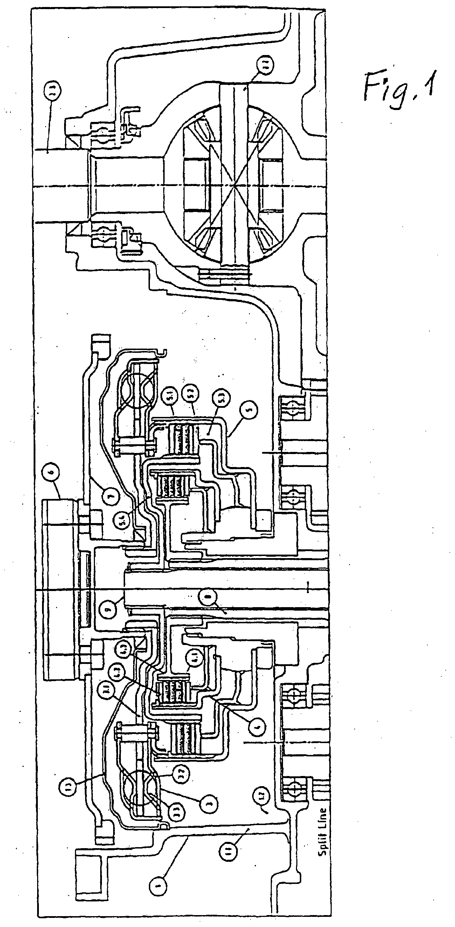

The object shown in diagram 1 contains the double clutch system 1 based on the invention, assembled together with the auxiliary range transmission 2. System 1 contains as important components a torsional oscillation damper 3, a radial inner multi-disk clutch 4 as well as a radial outer multi-disk clutch 5. Both clutches 4, 5 are enclosed inside each other. They are slightly shifted towards each other in an axial direction. The measurement of the shift could, however, also be different. Therefore, the two clutches 4,5 could completely overlap each other in an axial direction, or in contrast to this, lie completely apart axially.

With the double clutch unit 1 based on the invention, there is a chamber 1.2. This is sealed so it is leakproof for liquids, mainly by the wall 1.1 of the clutch unit 1 as well as the partition 1.3. In chamber 1.2 there are - not shown here - several auxiliary units such as oil pumps with filters, the electronic control device, the solenoid valves and the control valves to set or regulate the amount of oil, the oil container and, if applicable, other components.

There is a flange 6, in which torque from an internal combustion engine is introduced. Flange 6 is connected to a flywheel 7 so that it is torsionally fixed. In addition, it is connected to a centrifugal mass 3.1 of the torsional oscillation damper 3 so that it is torsionally fixed. The second centrifugal mass 3.2, in contrast to the first centrifugal mass 3.1, can rotate circumferentially (limited angles) using springs 3.3.

Moreover, both multi-disk clutches each enclose inner disks 4.1, 5.1 and outer disks 4.2, 5.2. The inner disks 4.1 of the radial inner clutch are connected to a hollow shaft 8 by a hub 4.3 so that they are torsionally fixed. The inner disks 5.1 of the outer clutch 5 are connected to the inner shaft 9 by a hub 5.4 so that they are torsionally fixed. The inner shaft 9 is enclosed by the hollow shaft 9.

An important characteristic is that the bell 5.3 of the outer clutch 5 is connected to the second centrifugal mass 3.2 of the torsional oscillation damper so that it is torsionally fixed. The second centrifugal mass 3.2 of the torsional oscillation damper is markedly enlarged by this, so that an effect similar to a two mass flywheel is created.

The transmission 2 does not require a detailed description, since it is not an object of the actual invention. There is a transmission casing 2.1, a differential 2.2, as well as a transmission driven shaft 2.3.

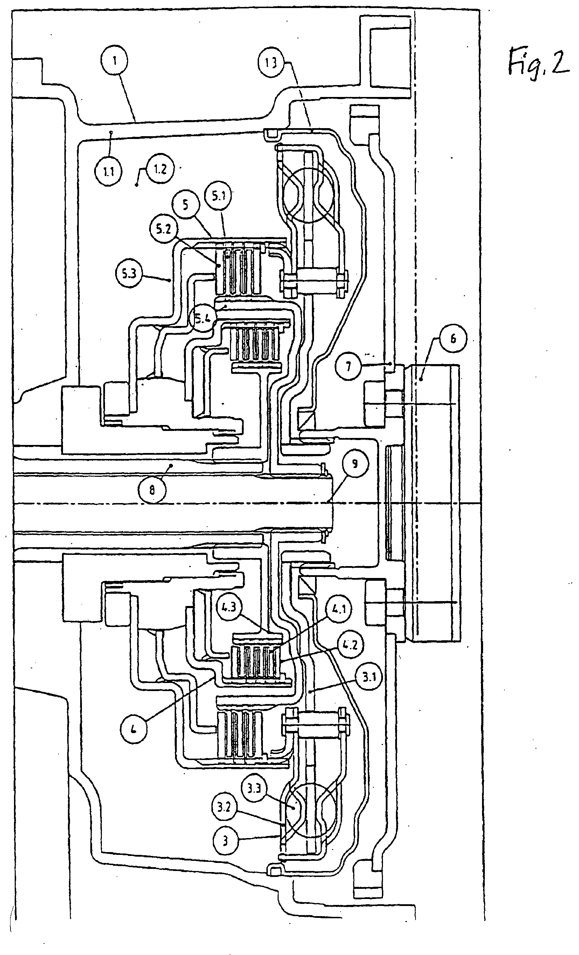

In diagram 2 the double clutch system 1 based on the invention is again represented by itself.

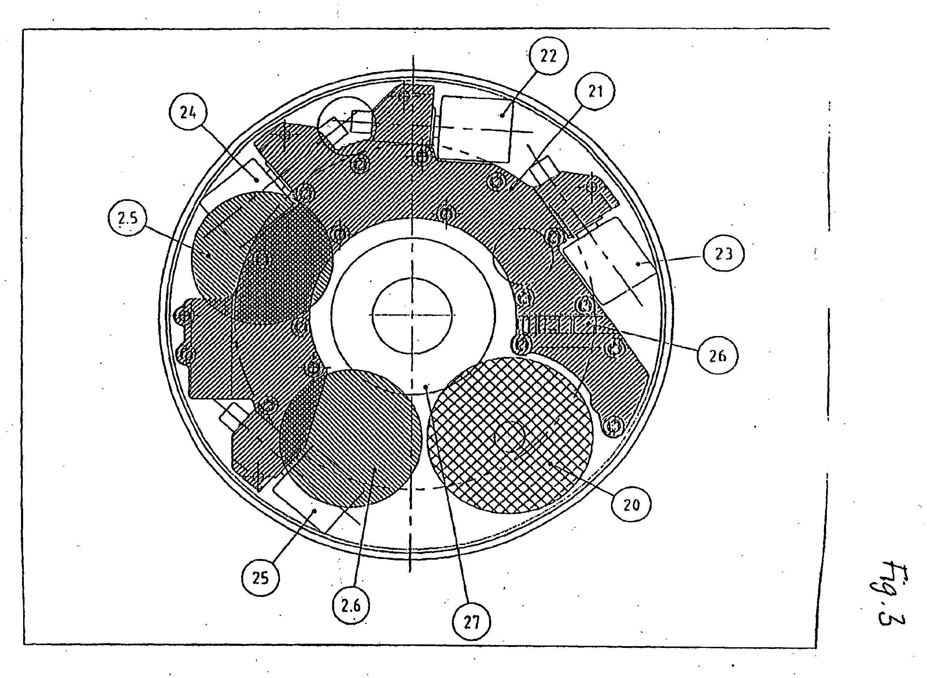

In the representation based on diagram 3, there are the following components:
two gear shafts 2.5, 2.6, an oil pump 20, a control valve assembly 21, solenoid valves 22, 23, 24, 25, a hydraulic slide 26, a driving wheel 27 for the oil pump 20.

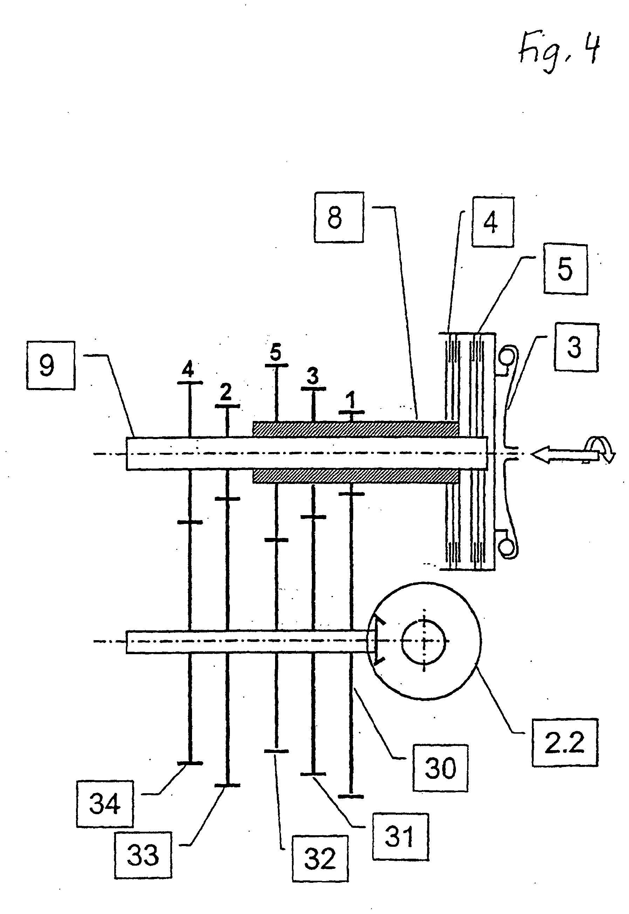

In the schematic represented in diagram 4 there are, on the other hand, the two clutches 4 and 5, the hollow shaft 8 and the inner shaft 9, as well as gear wheel units 30-34.

## Claims

1. Multiple Clutch System for a Transmission;
• with two multi-disk clutches (4, 5) that are coaxial with each other; wherein each clutch (4, 5) is assigned to one of two shafts (8, 9), of which the one (8) is a hollow shaft and encloses the other (9); wherein
• one (4) of the two clutches (4, 5) is connected with the hollow shaft (8), and the other (5) with the inner shaft (9);
**characterized in that**
• a torsional oscillation damper (3) having two centrifugal masses (3.1, 3.2) which on their part can rotate circumferentially against each other is connected to the two clutches (4, 5) which on their part can rotate circumferentially against each other, whereas
• one (3.2) of the two centrifugal masses (3.1, 3.2) is connected to the bell (5.3) of one (5) of the two clutches (4, 5) so that it is torsionally fixed, and wherein
• not only the torsional oscillation damper (3), but also the two clutches (4, 5) are arranged in a common sealed chamber (1.2), which contains lubrication oil,
• the two clutches (4, 5) are enclosed inside each other, so that the one (5) of the two clutches is located radially outside of the other (4),
• at least two of the following elements are arranged in the sealed chamber (1.2)
• an oil pump (20)
• a control valve assembly (21)
• solenoid valves (22, 23, 24, 25)
• a hydraulic slide (26) to regulate the volume of an electronic control
• a casing (1.1) is provided,
• several or all of the following elements, an oil pump (20), a control valve assembly (21), solenoid valves (22, 23, 24, 25) and a hydraulic slide (26) to regulate the volume of an electronic control, are arranged in the sealed chamber (1.2) surrounded by the bell (5.3) of the radial outer clutch (5), the casing (1.1) of the clutch system and the second centrifugal mass (3.2).

## Patentansprüche

1. Mehrfachkupplungssystem für ein Getriebe, mit
- zwei Mehrscheibenkupplungen (4, 5), die koaxial zueinander sind, wobei jede Kupplung (4, 5) einer von zwei Wellen (8, 9) zugeordnet ist, von denen die eine (8) eine Hohlwelle ist und die andere (9) umschließt; wobei
- eine (4) der beiden Kupplungen (4, 5) mit der Hohlwelle (8) verbunden ist und die andere (5) mit der inneren Welle (9) verbunden ist;
**dadurch gekennzeichnet, dass**
- ein Drehschwingungsdämpfer (3) mit zwei Fliehkraftkörpern (3.1, 3.2), die sich selbst umlaufend zueinander drehen können, mit den beiden Kupplungen (4, 5) verbunden ist, die sich selbst umlaufend zueinander drehen können, während
- einer (3.2) der beiden Fliehkraftkörper (3.1, 3.2) mit der Glocke (5.3) einer (5) der beiden Kupplungen (4, 5) drehfest verbunden ist, und wobei
- nicht nur der Drehschwingungsdämpfer (3), sondern auch die beiden Kupplungen (4, 5) in einer gemeinsamen abgedichteten Kammer (1.2) angeordnet sind, die Schmieröl enthält,
- die zwei Kupplungen (4, 5) sich gegenseitig einschließen, so dass die eine (5) der zwei Kupplungen in Radialrichtung außerhalb der anderen (4) angeordnet ist,
- wenigstens zwei der folgenden Elemente in der abgedichteten Kammer (1.2) angeordnet sind:
- eine Ölpumpe (20)
- eine Steuerventilanordnung (21)
- Magnetventile (22, 23, 24, 25)
- ein hydraulischer Schieber (26), um das Volumen einer elektronischen Steuerung zu regulieren,
- ein Gehäuse (1.1) vorgesehen ist,
- mehrere oder alle der folgenden Elemente, eine Ölpumpe (20), eine Steuerventilanordnung (21), Magnetventile (22, 23, 24, 25) und ein hydraulischer Schieber (26), der das Volumen einer elektrischen Steuerung reguliert, in der abgedichteten Kammer (1.2) angeordnet sind, die von der Glocke (5.3) der radialen äußeren Kupplung (5), dem Gehäuse (1.1) des Kupplungssystems und dem zweiten Fliehkraftkörper (3.2) umgeben ist.

## Revendications

1. Système d'embrayages multiples pour une transmission
avec deux embrayages à disques multiples (4, 5) qui sont coaxiaux l'un de l'autre ; dans lequel chaque embrayage (4, 5) est affecté à l'un de deux arbres (8, 9), dont l'un (8) est un arbre creux et enferme l'autre (9) ; dans lequel
l'un (4) des deux embrayages (4, 5) est relié à l'arbre creux (E), et l'autre (5) est relié à l'arbre intérieur (9) ;
**caractérisé en ce que**
un amortisseur d'oscillations de torsion (3) ayant deux masses centrifuges (3.1, 3.2), qui à leur tour peuvent tourner l'un contre l'autre suivant la circonférence, est relié aux deux embrayages (4, 5), qui à leur tour peuvent tourner l'un contre l'autre suivant la circonférence, alors que
l'une (3.2) des deux masses centrifuges (3.1, 3.2) est reliée à la cloche (5.3) de l'un (5) des deux embrayages (4, 5) de sorte à être fixe en torsion, et dans lequel non seulement l'amortisseur d'oscillations de torsion (3) mais également les deux embrayages (4, 5) sont placés dans une chambre scellée commune (1.2), qui contient de l'huile de lubrification,
les deux embrayages (4, 5) sont enfermés l'un dans l'autre, de sorte que l'un (5) des deux embrayages soit placé radialement à l'extérieur de l'autre (4),
au moins deux des éléments suivants sont placés dans la chambre scellée (1.2) :
une pompe à huile (20) ;
un ensemble de soupapes de commande (21) ;
des électrovannes (22, 23, 24, 25) ;
un tiroir hydraulique (26) servant à réguler le
volume d'une commande électronique,
un carter (1.1) est fourni,
plusieurs ou tous les éléments suivants, une pompe à huile (20), un ensemble de soupapes de commande (21), des électrovannes (22, 23, 24, 25), un tiroir hydraulique (26) servant à réguler le volume d'une commande électronique, sont placés dans la chambre scellée (1.2), entourée par la cloche (5.3) de l'embrayage radial extérieur (5), le carter (1.1) du système d'embrayages et la seconde masse centrifuge (3.2).
